# EUROPÄISCHE PATENTANMELDUNG

(11) **EP 2 269 704 A1**
(43) Veröffentlichungstag der Anmeldung: **05.01.2011**
(21) Anmeldenummer: 10006481.5
(22) Anmeldetag: 22.06.2010
(51) Int. Cl.: B01D 19/00, F01P 11/02

(54) **Ausgleichsbehälter zum Entgasen von Kühlmittel**

(30) Priorität: 03.07.2009 DE 102009031582
(71) Anmelder: Robert Bosch GmbH, 70469 Stuttgart (DE)
(72) Erfinder: Schuh, Peter, 97816 Lohr (DE); Wetzstein, Arno, 97845 Neustadt (DE); Kunkel, Ralf, 97833 Frammersbach (DE); Ebel, Werner, 97816 Lohr (DE)
(74) Vertreter: Thürer, Andreas

(57) **Zusammenfassung**

Offenbart ist ein Ausgleichsbehälter zum Entgasen von Kühlmittel. Dieser hat zumindest einen Ausgleichsraum, der mit einem Kühlmittelzu- und einem Kühlmittelablauf verbunden ist und einen Gasanschluss aufweist. Um zu erreichen, dass das durch den Ausgleichsbehälter fließende Kühlmittel eine große Kühlmitteloberfläche hat, ist in diesem zumindest ein Strömungselement angeordnet, über das das Kühlmittel fließt.

## Beschreibung

Die Erfindung geht aus von einem Ausgleichsbehälter gemäß dem Oberbegriff des Patentanspruchs 1.

Derartige Ausgleichsbehälter werden in Kühlkreisläufen eingesetzt und dienen zum Entgasen von Kühlmittel. Die Kühlkreisläufe dienen beispielsweise zum Kühlen von Kraftfahrzeugmotoren, von Kernreaktoren, chemischen Reaktionsapparaten oder zur Kühlung beim Bohren und Schneiden von Metallen.

In der DE 10 2006 014 400 A1 und der DE 10 2005 004 518 A1 ist jeweils ein Ausgleichsbehälter offenbart. Dieser hat einen unteren mit Kühlmittel und einen oberen mit Gas befüllten Abschnitt. Zu entgasendes Kühlmittel strömt über einen Kühlmittelzulauf in den unteren Abschnitt ein und wird über einen Kühlmittelablauf abgeführt. Beim Strömen des Kühlmittels durch den Ausgleichsbehälter gelangt das Gas im Kühlmittel über eine Kühlmitteloberfläche zum oberen mit Gas befüllten Abschnitt des Ausgleichsbehälters. Das Gas in dem oberen Abschnitt strömt über eine Gasleitung ab. Eine Entgasungsrate des Kühlmittels ist dabei abhängig von der Kühlmitteloberfläche in dem Ausgleichsbehälter. Je größer die Kühlmitteloberfläche ist, desto größer ist auch die Entgasungsrate. Die Größe der Kühlmitteoberfläche ist wiederum abhängig von der Größe des Ausgleichsbehälters, wodurch für eine hohe Entgasungsrate äußerst nachteilig ein großer Ausgleichsbehälter notwendig ist.

In der WO 79/00350 ist eine Entgasungsvorrichtung in Form eines Rohrabschnitts gezeigt. Die Rohrenden dienen dabei als Kühlmittelzu- und Kühlmittelablauf. In dem Rohrabschnitt ist eine spiralförmige Schaufel koaxial zur Rohrlängsachse angeordnet und liegt an einer Innenwandung des Rohrabschnitts an, wobei eine innere Umlaufkante der Schaufel zur Längsachse des Rohrabschnitts beabstandet ist, womit mittig ein Kanal mit einem etwa kreiszylindrischen Querschnitt gebildet ist. Durch die spiralförmige Schaufel wird den Rohrabschnitt durchströmendes Kühlmittel in eine Drehbewegung versetzt, womit eine Zentrifugalkraft auf dieses wirkt und Gasblasen, die eine geringere Dichte aufweisen, in Richtung zur Längsachse und somit zu dem Kanal verdrängt werden. Die Gasblasen steigen dann - aufgrund der senkrechten Anordnung des Rohrabschnitts zur Erdoberfläche - in dem Kanal zu einer im Endbereich des Kanals angeordneten Gasabführleitung auf. Nachteilig bei dieser Lösung ist der äußerst komplexe und kostenintensive Aufbau der Entgasungsvorrichtung.

Demgegenüber liegt der Erfindung die Aufgabe zugrunde, einen Ausgleichsbehälter zu schaffen, der einfach und Bauraum sparend aufgebaut ist, bei gleichzeitig hoher Entgasungsrate eines Kühlmittels.

Diese Aufgabe wird gelöst durch einen Ausgleichsbehälter mit den Merkmalen des Patentanspruchs 1.

Erfindungsgemäß hat ein Ausgleichsbehälter zum Entgasen von Kühlmittel bzw. Druckmittel zumindest einen Ausgleichsraum, der mit einem Kühlmittelzu- und einem Kühlmittelablauf verbunden ist. Der Ausgleichsraum weist zumindest ein Strömungselement zur Erzeugung einer Kühlmitteloberfläche auf. Über dieses führt ein Kühlmittelströmungspfad des Kühlmittels vom Kühlmittelzu- zum Kühlmittelablauf.

Diese Lösung hat den Vorteil, dass ein Ausgleichsbehälter mit einem derartigen Strömungselement eine vergrößerte Kühlmitteloberfläche im Vergleich zu einem Ausgleichsbehälter ohne dieses Strömungselement aufweist, wodurch eine Entgasungsrate des Kühlmittels bei gleicher Baugröße des Ausgleichsbehälters erhöht ist.

Vorrichtungstechnisch äußerst einfach kann das Strömungselement eine zwischen dem Kühlmittelzu- und dem Kühlmittelablauf angeordnete Strömungsplatte sein.

Um Bauraum sparend die Kühlmitteloberfläche im Ausgleichsbehälter weiter zu vergrößern, können mehrere kaskadenförmig angeordnete Strömungsplatten vorgesehen sein.

Mit Vorteil ist der Kühlmittelzulauf oberhalb des Kühlmittelablaufs bezüglich einer Bodenfläche des Ausgleichsbehälters angeordnet, wodurch ein Fließen des Kühlmittels aufgrund von einer Schwerkraft ermöglicht ist.

Eine vorteilhafte Kühlmittelströmung kann erreicht werden, wenn die Strömungsplatten übereinander und angewinkelt zueinander angeordnet sind.

Zum Ermöglichen eines einfachen Einströmens in den Ausgleichsbehälter ist der Kühlmittelzulauf vorzugsweise eine vom Ausgleichsraum abgegrenzte Zulaufkammer, die eine in Richtung weg von der Bodenfläche zum Ausgleichsraum geöffnete Öffnungsseite hat.

Bevorzugter Weise liegt die oberste Strömungsplatte mit einem oberen Endabschnitt an einem Randabschnitt der Öffnungsseite etwa an, womit Kühlmittel einfach von der Zulaufkammer auf die Strömungsplatte fließen kann.

Die Strömungsplatten sind bevorzugter Weise etwa rechteckförmig ausgebildet und mit einer Befestigungsseite an einer gemeinsamen Befestigungsfläche des Ausgleichsbehälters fixiert. Zur Begrenzung des Kühlmittelströmungspfads kann eine der Befestigungsseite gegenüberliegende Plattenseite einer jeweiligen Strömungsplatte bogenförmig, weg von der Bodenfläche des Ausgleichsbehälters weisend, ausgestaltet sein.

Zum Entgasen von Kühlmittel zweier Kühlmittelkreisläufe können in dem Ausgleichsbehälter zwei Ausgleichsräume vorgesehen sein, die über eine Mischkammer voneinander getrennt sind.

Die Mischkammer kann einfach von einer jeweils einen Ausgleichsraum begrenzenden Befestigungsfläche begrenzt sein, wobei die Mischkammer dann über zumindest eine jeweils in der Befestigungsfläche ausgebildete Kammeröffnung mit den Ausgleichsräumen in Kühlmittel- und/oder Gasverbindung steht.

Die Kammeröffnungen sind vorrichtungstechnisch kostengünstig als Durchgangsbohrungen in einem unteren Bereich der Ausgleichsräume ausbildbar.

Zur Kontrolle der Kühlmittelmenge in der Mischkammer ist ein Füllstandsmesser anordbar.

Zum Entlasten einer oder beider Ausgleichsräume kann ein Überdruckventil zur Abführung des Gases angeordnet sein.

Sonstige vorteilhafte Weiterbildungen der Erfindung sind Gegenstand weiterer Unteransprüche.

Im Folgenden wird ein bevorzugtes Ausführungsbeispiel der Erfindung anhand mehrerer Zeichnungen näher erläutert. Es zeigen:
Figur 1 in einer perspektivischen Darstellung einen Ausgleichsbehälter gemäß einem Ausführungsbeispiel;
Figur 2 in einer perspektivischen Darstellung einen Innenraum des Ausgleichsbehälters; und
Figur 3 in einer Schnittansicht einen Querschnitt des Ausgleichsbehälters.

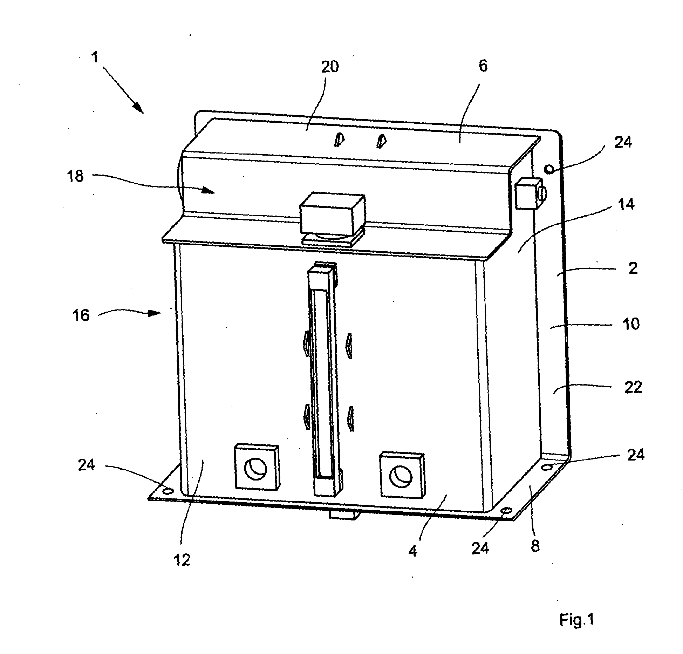

Figur 1 zeigt in einer perspektivischen Darstellung einen erfindungsgemäßen Ausgleichsbehälter 1 gemäß einem Ausführungsbeispiel. Dieser dient zum Entgasen von Kühlmittel zweier Kühlmittelkreisläufe. Der Ausgleichsbehälter 1 ist Teil einer Kühlanlage insbesondere für Schienenfahrzeuge.

Ein Gehäuse des Ausgleichsbehälters 1 ist im Wesentlichen aus drei Gehäuseschalen 2, 4, 6 zusammengesetzt. Die erste Gehäuseschale 2 ist ein etwa rechtwinklig gebogenes Blech und bildet eine Bodenfläche 8 und eine Rückwand 10 des Ausgleichsbehälters 1 aus. Eine Vorderwand 12 und zwei Seitenwände 14, 16 sind durch die U-förmig geformte Gehäuseschale 4 gebildet. Die Vorderwand 12 ist zusammen mit Abschnitten der Seitenwände 14, 16 im oberen Bereich in Figur 1 axial zurückgestuft und bildet damit eine Stufe 18 aus. Auf die Stufe 18 der Gehäuseschale 4 ist die Gehäuseschale 6 gesetzt, die als gestufter Deckel 20 ausgebildet ist. Die Rückwand 10 und die Bodenfläche 8 der Gehäuseschale 2 weisen einen von der Gehäuseschale 4 wegkragenden Gehäuserand 22 auf, wobei in diesem mehrere Durchgangsbohrungen 24 zur Befestigung des Ausgleichsbehälters 1 ausgebildet sind. Durch die Stufe 18 ist der Ausgleichsbehälter 1 äußerst platzsparend aufgebaut.

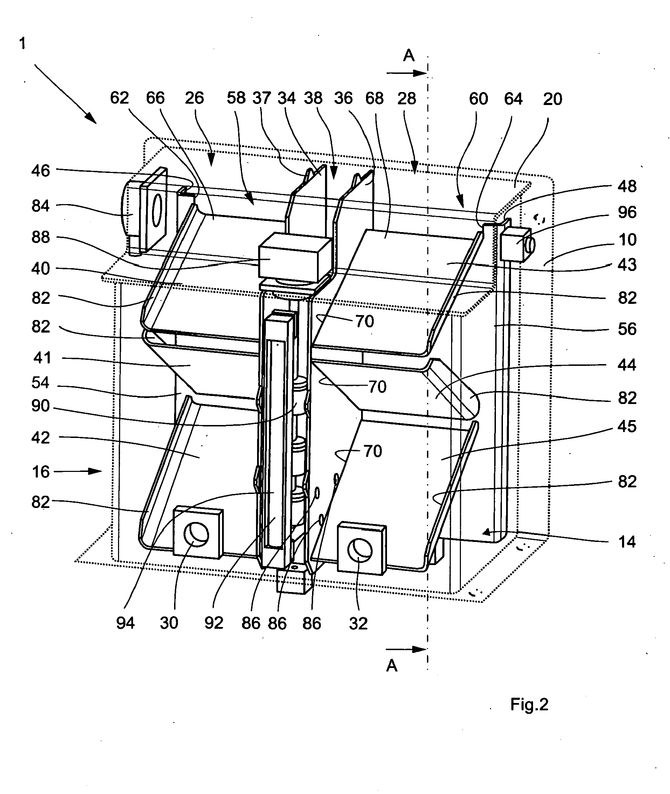

In der folgenden Figur 2 wird der innere Aufbau des erfindungsgemäßen Ausgleichsbehälters 1 erläutert.

Figur 2 offenbart in einer perspektivischen Darstellung den Innenbereich des Ausgleichsbehälters 1 aus Figur 1. Dieser begrenzt einen linken und rechten Ausgleichsraum 26, 28, die jeweils zwei in der Figur 1 nicht dargestellte Kühlmittelzuläufe bzw. Kühlmittelzulaufanschlüsse und jeweils einen Kühlmittelablauf bzw. Kühlmittelablaufanschluss 30 bzw. 32 aufweisen. Ein jeweiliger Ausgleichsraum 26, 28 dient zum Entgasen von Kühlmittel von jeweils einem Kühlmittelkreislauf. Die Ausgleichsräume 26, 28 sind in dem Ausgleichsbehälter 1 von zwei etwa mittig im Ausgleichsbehälter und etwa parallel zur Seitenwand 14 verlaufenden Befestigungsflächen 34 bzw. 36 voneinander getrennt. Diese sind über eine Mehrzahl von Nut-Federverbindungen in dem Ausgleichsbehälter fixiert, wobei die Federn an den Befestigungsflächen 34 bzw. 36 und die Nuten am Ausgleichsbehälter 1 ausgebildet sind. Zwischen den beiden Befestigungsflächen 34, 36 ist eine Mischkammer 38 ausgebildet, deren Funktion weiter unten beschrieben wird.

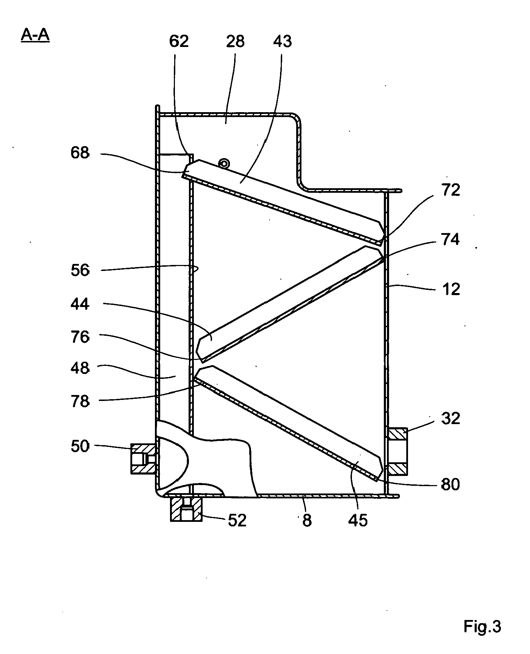

In einem jeweiligen Ausgleichsraum 26, 28 sind drei Strömungselemente in Form von Strömungsplatten 40, 41, 42 bzw. 43, 44, 45 kaskadenförmig angeordnet. Über diese fließt das zu entgasende Kühlmittel in Figur 2 von oben nach unten zum Kühlmittelablaufanschluss 30 bzw. 32. Die in Figur 2 nicht dargestellten Kühlmittelzulaufanschlüsse münden jeweils in einer im Ausgleichsraum 26 bzw. 28 ausgebildeten Zulaufkammer 46 und 48. Ein Querschnitt unter anderem der Zulaufkammern 46, 48 ist in der folgenden Figur 3 gezeigt.

Die Figur 3 stellt eine Querschnittansicht des Ausgleichsbehälters 1 aus Figur 2 entlang einer parallel zur Befestigungsfläche 36 in Figur 2 verlaufenden und den rechten Kühlmittelablaufanschluss 32 mittig schneidenden Schnittebene - die mit einer Linie A-A in Figur 2 angedeutet ist - dar. Hierbei sind die beiden Kühlmittelzulaufanschlüsse 50, 52 des in Figur 2 rechten Ausgleichsraums 28 ersichtlich, die in die Zulaufkammer 48 münden.

In Figur 2 sind die Zulaufkammern 46, 48 abschnittsweise von der Rückwand 10, der Befestigungsfläche 34 bzw. 36 und über ein etwa L-förmig gebogenes und als Kammerwandung 54 bzw. 56 dienendes Blech begrenzt.

Die Zulaufkammern 46 und 48 weisen jeweils eine in Richtung von der Bodenfläche 8 weg weisende Öffnungsseite 58 bzw. 60 auf, von der aus Kühlmittel auf die Strömungsplatten 40 bzw. 43 fließt.

Eine jeweilige Kammerwandung 54 und 56 ist von der Öffnungsseite 58 bzw. 60 her, auf der zur Vorderwand 12 des Ausgleichsbehälters 1 weisenden Seite, axial in Richtung der Bodenfläche 8 zurückgestuft. Hierdurch ist an den Öffnungsseiten 58 und 60 ein zurückgestufter Randabschnitt 62 bzw. 64 gebildet. Die jeweils obersten Strömungsplatten 40 und 43 der Ausgleichsräume 26 bzw. 28 in Figur 2 liegen jeweils mit einem oberen Endabschnitt 66 bzw. 68 an dem axial zurückgestuften Randabschnitt 62 bzw. 64 derart an, dass Kühlmittel in den Zulaufkammern 46 bzw. 48 auf die jeweilige Strömungsplatte 40 fließt.

Die Strömungsplatten 40, 41, 42 und 43, 44, 45 sind jeweils mit einer Befestigungsseite 70 an der jeweiligen Befestigungsfläche 34 bzw. 36 über eine nicht dargestellte Nut-Federverbindung befestigt, wobei an den Strömungsplatten 40 bis 44 die Feder und an den Befestigungsflächen 34, 36 die Nut ausgebildet ist. Die genaue Anordnung der Strömungsplatten 43 bis 45 in dem in der Figur 2 rechten Ausgleichsraum 28 ist in der Figur 3 gezeigt.

Die Strömungsplatten 43 bis 45 in Figur 3 sind geneigt zueinander angeordnet. Die oberste Strömungsplatte 43 in Figur 3 ist vom oberen Endabschnitt 68 aus in Richtung zur Bodenfläche 8 geneigt und erstreckt sich bis etwa zur Vorderwand 12 des Ausgleichsbehälters 1, wobei ein in der Figur 3 rechter Endabschnitt 72 etwas zur Vorderwand 12 beabstandet ist, damit Kühlmittel von der obersten Strömungsplatte 43 zur mittleren Strömungsplatte 44 zwischen der Strömungsplatte 43 und der Vorderwand 12 fließen kann. Ein in der Figur 3 rechter Endabschnitt 74 der mittleren Strömungsplatte 44 liegt etwa an der Vorderwand 12 an und ist benachbart zum rechten Endabschnitt 72 der oberen Strömungsplatte 43 angeordnet. Die mittlere Strömungsplatte 44 erstreckt sich dann zur Oberfläche 8 geneigt in Richtung der Kammerwandung 56 und ist mit einem in der Figur 3 linken Endabschnitt 76 wiederum etwas von dieser beabstandet, damit Kühlmittel von dieser mittleren Strömungsplatte 44 auf die unterste Strömungsplatte 45 fließen kann. Ein in der Figur 3 linker Endabschnitt 78 der unteren Strömungsplatte 45 ist anliegend zur Kammerwandung 56 und benachbart zum Endabschnitt 76 der mittleren Strömungsplatte 44 angeordnet. Die untere Strömungsplatte 45 erstreckt sich dann hin zur Bodenfläche 8 etwa bis zur Vorderwand 12 und ist dabei mit einem in der Figur 3 rechten Endabschnitt 80 von dieser etwas beabstandet. Auf der Höhe des rechten Endabschnitts 80 der unteren Strömungsplatte 45 ist der Kühlmittelablaufanschluss 32 ausgebildet. Die Strömungsplatten 40 bis 42 in dem in Figur 2 linken Ausgleichsraum 26 sind entsprechend angeordnet.

Die Strömungsplatten 40 bis 45 haben in Figur 2 jeweils eine von der Befestigungsseite 70 gegenüberliegende Begrenzungsseite 82, die bogenförmig in Richtung des Deckels 20 des Ausgleichsbehälters 1 geformt ist, wodurch über die Strömungsplatten 40, 41, 42 bzw. 43, 44, 45 fließendes Kühlmittel von den Befestigungsflächen 34 bzw. 36 und den Begrenzungsseiten 82 begrenzt ist. Die Begrenzungsseiten 82 der Strömungsplatten 40 bis 45 sind von den Seitenwänden 14, 16 des Ausgleichsbehälters 1 beabstandet.

Im Folgenden wird die Funktionsweise des erfindungsgemäßen Ausgleichsbehälters 1 anhand der Figuren 2 und 3 erläutert.

Zu entgasendes Kühlmittel strömt über die Kühlmittelzulaufanschlüsse 50, 52 in die Zulaufkammern 46, 48 ein und steigt nach oben in Richtung zur Öffnungsseite 58 bzw. 60 der Zulaufkammern 46 bzw. 48. Von der Öffnungsseite 58 bzw. 60 fließt das Kühlmittel dann über den axial zurückgestuften Randabschnitt 62 bzw. 64 auf den Endabschnitt 66 bzw. 68 der oberen Strömungsplatten 40 bzw. 43. Von diesen fließt das Kühlmittel weiter auf die mittleren Strömungsplatten 41 bzw. 44 und von diesen auf die unteren Strömungsplatten 42 bzw. 45, wobei es sich dann im unteren Bereich des Ausgleichsraums 26 bzw. 28 sammelt und über den Kühlmittelablaufanschluss 30 bzw. 32 abfließt. Durch das Fließen des Kühlmittels über die Strömungsplatten 40 bis 45 ist eine äußerst große Kühlmitteloberfläche zum Entgasen ausgebildet. Das Gas sammelt sich dann in den Ausgleichsräumen 26, 28 und strömt über ein an der Seitenwand 16 des Ausgleichsbehälters 1 aus Figur 2 im oberen Bereich angeordnetes Überdruckventil 84 ab.

Die Ausgleichsräume 26, 28 sind jeweils über Kammeröffnungen in Form von drei in die Befestigungsflächen 34, 36 eingebrachte Durchgangsbohrungen 86 mit der Mischkammer 38 in Kühlmittel- und Gasverbindung. Die Durchgangsbohrungen 86 sind etwas oberhalb der unteren Strömungsplatte 42 bzw. 45 ausgebildet. Die Mischkammer 38 dient zusammen mit den Durchgangsbohrungen 86 zum Ausgleich der Kühlmittelmenge und des Gases zwischen den Ausgleichsräumen 26, 28.

Zur Kontrolle der Kühlmittelmenge in den Ausgleichsräumen 26, 28 ist in der Mischkammer 38 ein Füllstandsmesser 88 angeordnet, was in Figur 2 dargestellt ist. Dieser hat einen etwa stabförmigen Schwimmer 90, der von der Stufe 18 des Deckels 20 aus Figur 1 in die Mischkammer 38 in Richtung der Bodenfläche 8 hineinkragt. Durch die Anordnung des Füllstandsmessers 88 im Bereich der Stufe 18 ist dieser besser durch äußere mechanische Einflüsse geschützt. Steigt die Kühlmittelmenge in der Mischkammer 38 bzw. in den Ausgleichsräumen 26, 28 an, so wird der Schwimmer 90 durch eine Auftriebskraft in Richtung weg von der Bodenfläche 8 angehoben. Die Hubbewegung des Schwimmers 90 wird dann durch eine auf dem Deckel 20 angeordnete Einrichtung erfasst und beispielsweise als elektrisches Signal an eine Kontrolleinheit gemeldet. Zusätzlich ist in der Figur 2 noch ein optischer Füllstandsmesser 92 dargestellt, der an der Vorderwand 12 des Ausgleichsbehälters 1 angeordnet und mit der Mischkammer 38 verbunden ist. Kühlmittel in der Mischkammer 38 gelangt somit in den Füllstandsmesser 92, wodurch ein Pegel des Kühlmittels über ein Sichtfenster 94 des Füllstandsmessers 92 ersichtlich ist.

An der Seitenwand 14 des Ausgleichsbehälters 1 ist in der Figur 2 noch ein Messanschluss 96 ausgebildet, über den beispielsweise der Gasdruck bestimmbar ist.

Es ist denkbar, neben den beiden Ausgleichsräumen 26, 28 noch mehrere Ausgleichsräume in dem Ausgleichsbehälter 1 anzuordnen, die jeweils über eine Mischkammer in Verbindung stehen. Auch könnte beispielsweise nur ein Ausgleichsraum in dem Ausgleichsbehälter 1 ausgebildet sein.

Offenbart ist ein Ausgleichsbehälter zum Entgasen von Kühlmittel. Dieser hat zumindest einen Ausgleichsraum, der mit einem Kühlmittelzu- und einem Kühlmittelablauf verbunden ist und einen Gasanschluss aufweist. Um zu erreichen, dass das durch den Ausgleichsbehälter fließende Kühlmittel eine große Kühlmitteloberfläche hat, ist in diesem zumindest ein Strömungselement angeordnet, über das das Kühlmittel fließt.

## Patentansprüche

1. Ausgleichsbehälter zum Entgasen von Kühlmittel mit zumindest einem Ausgleichsraum (26, 28), der mit einem Kühlmittelzu- und einem Kühlmittelablauf (58, 60, 30, 32) verbunden ist, **dadurch gekennzeichnet, dass** der zumindest eine Ausgleichsraum (26, 28) zumindest ein Strömungselement (40, 41, 42, 43 ,44, 45) zur Erzeugung einer Kühlmitteloberfläche aufweist, über das ein Kühlmittelströmungspfad des Kühlmittels vom Kühlmittelzu- zum Kühlmittelablauf (58, 60, 30, 32) führt.

2. Ausgleichsbehälter nach Anspruch 1, wobei das zumindest eine Strömungselement (40, 41, 42, 43, 44, 45) eine zwischen dem Kühlmittelzu- und dem Kühlmittelablauf (58, 60, 30, 32) angeordnete Strömungsplatte (40, 41, 42, 43 ,44, 45) ist.

3. Ausgleichsbehälter nach Anspruch 2, wobei mehrere kaskadenförmig angeordnete Strömungsplatten (40, 41, 42, 43 ,44, 45) vorgesehen sind.

4. Ausgleichsbehälter nach einem der vorhergehenden Ansprüche, wobei der Kühlmittelzulauf (58, 60) oberhalb des Kühlmittelablaufs (30, 32) bezüglich einer Bodenfläche (8) des Ausgleichsbehälters (1) angeordnet ist.

5. Ausgleichsbehälter nach Anspruch 2 bis 4, wobei die Strömungsplatten (40, 41, 42, 43, 44, 45) übereinander und angewinkelt zueinander angeordnet sind.

6. Ausgleichsbehälter nach Anspruch 4 oder 5, wobei der Kühlmittelzulauf (58, 60) eine vom jeweiligen Ausgleichsraum (26, 28) abgegrenzte Zulaufkammer (46, 48) ist, die eine in Richtung weg von der Bodenfläche (8) zum jeweiligen Ausgleichsraum (26, 28) geöffnete Öffnungsseite (58, 60) aufweist.

7. Ausgleichsbehälter nach Anspruch 6, wobei die oberste Strömungsplatte (40, 43) mit einem oberen Endabschnitt (66, 68) an einem axial zurückgestuften Randabschnitt (62, 64) der Öffnungsseite (58, 60) anliegt.

8. Ausgleichsbehälter nach einem der Ansprüche 2 bis 7, wobei die Strömungsplatten (40, 41, 42, 43, 44, 45) etwa rechteckförmig ausgebildet sind und mit einer Befestigungsseite (70) an einer Befestigungsfläche (34, 36) des Ausgleichsbehälters (1) fixiert sind.

9. Ausgleichsbehälter nach Anspruch 8, wobei eine der Befestigungsseite (70) gegenüberliegende Begrenzungsseite (82) einer jeweiligen Strömungsplatte (40, 41, 42, 43, 44, 45) zur Begrenzung des Kühlmittelströmungspfads bogenförmig, weg von der Bodenfläche (8) des Ausgleichsbehälters (1) weisend, ausgestaltet ist.

10. Ausgleichsbehälter nach einem der vorhergehenden Ansprüche, wobei in diesem zwei Ausgleichsräume (26, 28) vorgesehen sind, die über eine Mischkammer (38) voneinander getrennt sind.

11. Ausgleichsbehälter nach Anspruch 10, wobei die Mischkammer (38) von zwei Befestigungsflächen (34, 36) begrenzt ist, und wobei die Mischkammer (38) über zumindest eine jeweils in der Befestigungsfläche (34, 36) ausgebildete Kammeröffnung (86) mit den Ausgleichsräumen (26, 28) in Kühlmittelverbindung steht.

12. Ausgleichsbehälter nach Anspruch 11, wobei die Kammeröffnung in einer jeweiligen Befestigungsfläche als drei Durchgangsbohrungen (86) in einem unteren Bereich der Ausgleichsräume (26, 28) ausgebildet ist.

13. Ausgleichsbehälter nach einem der Ansprüche 10 bis 12, wobei ein Füllstandsmesser (88, 92) zum Bestimmen der Kühlmittelmenge in der Mischkammer (38) vorgesehen ist.

14. Ausgleichsbehälter nach einem der vorhergehenden Ansprüche, wobei ein oder beide Ausgleichsräume ein Überdruckventil (84) aufweisen.
